# EUROPÄISCHE PATENTSCHRIFT

(11) **EP 1 630 056 B1**
(45) Veröffentlichungstag und Bekanntmachung des Hinweises auf die Patenterteilung: **24.12.2008**
(21) Anmeldenummer: 05014086.2
(22) Anmeldetag: 29.06.2005
(51) Int. Cl.: B60W 10/02, B60W 10/10, B60W 30/00, B60R 25/00, B60R 25/06

(54) **Kraftfahrzeug mit einer Wegfahrsperre**
Vehicle immobilizer
Dispositif d'immobilisation pour véhicules

(30) Priorität: 23.07.2004 DE 102004035861
(43) Veröffentlichungstag der Anmeldung: 01.03.2006
(73) Patentinhaber: AUDI AG, 85045 Ingolstadt (DE)
(72) Erfinder: Graf, Johann, 93345 Hausen (DE)
(74) Vertreter: Thielmann, Frank

(56) Entgegenhaltungen:
- EP-A- 1 118 515
- WO-A-95/12506
- DE-A1- 19 845 299
- DE-A1- 19 930 279
- DE-A1- 19 940 960

## Beschreibung

Die Erfindung betrifft ein Kraftfahrzeug mit einem Getriebe wie es beispielsweise aus der DE 100 30 837 A1 bekannt ist. Solche Getriebe dienen der Übertragung der von einer Antriebseinrichtung ausgehenden Kraft auf Antriebsräder eines Kraftfahrzeuges wozu Wandler, Wellen, Zahnräder und zumindest eine betätigbare Kupplung vorgesehen sind. Das bekannte Getriebe ist mit einem Drehzahlsensor ausgestattet, welcher die Drehzahl einer Getriebewelle detektiert. Hierbei kann sowohl die Drehzahl der Getriebeabtriebswelle als auch die Drehzahl der Getriebeeingangswelle detektiert werden. Ein der Motordrehzahl entsprechendes Signal ist über einen Datenbus anderen Steuergeräten zuführbar, so dass diese die Motordrehzahl nicht noch einmal ermitteln müssen.

Es ist bekannt, im Kraftfahrzeug Wegfahrsperren vorzusehen, die eine unberechtigte Benutzung verhindern sollen.

Aus der DE 199 30 279 A1 ist ein Kraftfahrzeug mit einer Einrichtung zum Erkennen der berechtigten oder unberechtigten Benutzung des Kraftfahrzeuges und einer automatisierten, im Antriebsstrang des Kraftfahrzeuges liegenden Kupplung bekannt. Für den Fall des Erkennens der unberechtigten Benutzung des Kraftfahrzeuges wird eine Kupplungsstellung vorgegeben, in der die Kupplung in einem zumindest teilweise eingerückten Zustand gehalten ist. Die Inbetriebnahme des Kraftfahrzeuges ist somit erheblich begrenzt.

Aufgabe der Erfindung ist es, die Sicherheit des Kraftfahrzeuges gegen unberechtigte Benutzung zu verbessern.

Die Aufgabe wird erfindungsgemäß durch den Gegenstand des Patentanspruches 1 gelöst.

Vorteil der Erfindung ist, dass die Getriebewegfahrsperre im Getriebe angeordnet ist und damit vor schnellem und unberechtigtem Zugriff gut geschützt ist. Erzeugt die Getriebewegfahrsperre ein Signal zum Ansteuern der zumindest einen steuerbaren Kupplung zum Bewirken des Kraftschlusses zum Ansprechen des Wandlers, so kann ein von einer dem Wandler zugeordneten Drehzahlerfassungseinrichtung ausgehendes Signal herangezogen werden um einen Betrieb der Antriebseinrichtung festzustellen. Bei Fehlen des Signals, kann der weitere Betrieb des Kraftfahrzeuges durch Einwirkung auf das Getriebe eingeschränkt oder aufgehoben werden. Es wird somit ein System zur Beschränkung oder Aufhebung des weiteren Betriebes des Kraftfahrzeuges zur Verfügung gestellt, das, unabhängig von in das Getriebe eingeleiteten Signalen, einen Betrieb der Antriebseinrichtung detektieren kann, wodurch die Sicherheit vor unberechtigter Benutzung erheblich verbessert ist.

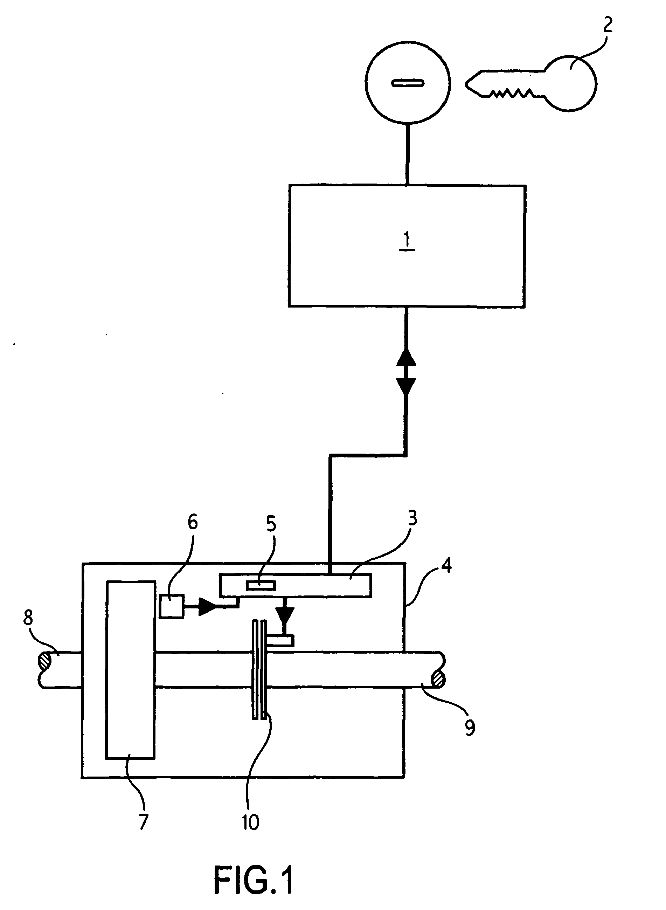

Weitere Vorteile und Einzelheiten der Erfindung ergeben sich aus der nachfolgenden Beschreibung eines Ausführungsbeispieles anhand der Figur in Verbindung mit den Unteransprüchen.

Ausgehend von der Figur, in der nur die für die Erfindung wesentlichen Elemente darstellt sind, weist ein Kraftfahrzeug zumindest eine Wegfahrsperre 1 auf, die nur bei berechtigtem Zugriff auf das Kraftfahrzeug, beispielsweise mittels eines codierten Schlüssels 2 oder codierten Signalen 3, einen Betrieb des Kraftfahrzeuges erlaubt. Durch illegale Manipulation des Schlüssels 2 oder der Wegfahrsperre 1 versuchen Unberechtigte die Wegfahrsperrenfunktion zu umgehen, um somit Zugriff auf das Fahrzeug zu haben. Ausgehend hiervon ist gemäß der vorliegenden Erfindung eine Getriebewegfahrsperre 3 im Getriebe 4 des Kraftfahrzeuges angeordnet. Diese Getriebewegfahrsperre 3 erhält beim berechtigten Zugriff auf das Fahrzeug eine verschlüsselte Information von der Wegfahrsperre 1, die beispielsweise ein Zeitglied 5 der Getriebewegfahrsperre 3 steuert. Der Getriebewegfahrsperre 3 ist zudem das Signal einer Drehzahlerfassungseinrichtung 6 zuführbar, die einem Wandler 7 des Getriebes 4 zugeordnet ist. Der Wandler 7 des Getriebes 4 kann insbesondere als Turbine eines automatischen Getriebes 4 ausgeführt sein, die eine Verbindung zu einer Eingangswelle 8 des Getriebes 4 hat. In bekannter Weise ist an die Eingangswelle 8 eine nicht dargestellte Antriebseinrichtung koppelbar.

Ist die Antriebseinrichtung berechtigt in Betrieb, so wird das von ihr ausgehende Antriebsmoment über den Wandler 7, über zumindest eine steuerbare Kupplung 10- Wellen und Zahnräder sind nicht dargestellt - an eine Abtriebswelle 9 und darüber an letztlich die Antriebsräder des Kraftfahrzeuges weitergeleitet. Wird das Kraftfahrzeug hierdurch in Bewegung gesetzt, so rotiert auch der Wandler 7 und es wird ein Signal von der Drehzahlerfassungseinrichtung 6 erzeugt, das das Zeitglied 5 außer Betrieb setzt. Steht das Fahrzeug, so steht auch der Wandler 7. Somit wird kein Drehzahlsignal von der Drehzahlerfassungseinrichtung 6 erzeugt und das Zeitglied 5 gestartet. Nach Ablauf einer vorbestimmten Zeit ist vorgesehen, dass die Getriebewegfahrsperre 3 durch Öffnen zumindest einer steuerbaren Kupplung 10 oder mechanisches Sperren des Getriebes 4 den weiteren Betrieb des Kraftfahrzeuges einschränkt oder aufhebt. Damit es hierbei zu keinen Fehlauslösungen kommt, ist es notwendig, auch im Stand des Kraftfahrzeuges, aber bei betriebener Antriebseinrichtung eine Rotation des Wandlers 7 zu detektieren, um das Zeitglied 5 wieder zurückzusetzen. Hierzu wird, ausgehend von der Getriebewegfahrsperre 3 und getriggert von dem Zeitglied 5, vor Ablauf der vorbestimmten Zeit ein Signal zum Schließen der steuerbaren Kupplung 10 erzeugt, so dass hierüber der Wandler 7 in Rotation versetzbar und somit ein Signal von der Drehzahlerfassungseinrichtung 6 erzeugbar ist. Vorzugsweise erfolgt das Schließen der Kupplung 10 nur soweit, dass gerade eine Rotation des Wandlers 7 bewirkbar ist ohne dass dabei das Drehmoment an der Abtriebswelle 9 erhöht wird.

Es wird folglich ein Betrieb der Antriebseinrichtung über eine steuerbare Kupplung 10 zum Bewirken einer Rotation eines Getriebeelementes detektiert und in Abhängigkeit von der Detektion einer Rotation ein weiterer Betrieb zugelassen oder, bei einer Nichtdetektion der Rotation, der Betrieb des Kraftfahrzeuges, insbesondere des Getriebes 4, eingeschränkt oder aufgehoben.

Ein erneuter Betrieb des Getriebes 4 ist folglich nur dann möglich, wenn der Zugang über den berechtigten Schlüssel 2 und über die Wegfahrsperre 1 erneut zugelassen wird.

### Liste der Bezugszeichen:

- 1: Wegfahrsperre
- 2: Schlüssel
- 3: Getriebewegfahrsperre
- 4: Getriebe
- 5: Zeitglied
- 6: Drehzahlerfassungseinrichtung
- 7: Wandler
- 8: Eingangswelle
- 9: Abtriebswelle
- 10: Kupplung

## Patentansprüche

1. Kraftfahrzeug mit einer Wegfahrsperre,
mit einem Getriebe (4) aufweisend einen Wandler (7),
mit einer dem Wandlern (7) zugeordneten Drehzahlerfassungseinrichtung (6),
mit zumindest einer steuerbaren Kupplung (10) zum Bewirken eines Kraftschlusses zwischen dem Wandler (7) und weiteren Getriebekomponenten und
mit einer im Getriebe (4) angeordneten Getriebewegfahrsperre (3),
wobei ausgehend von der Getriebewegfahrsperre (3) ein Signal zum Ansteuern der zumindest einen steuerbaren Kupplung (10) zum Bewirken des Kraftschlusses erzeugbar ist und
wobei ein Signal der Drehzahlerfassungseinrichtung (6) zur Getriebewegfahrsperre (3) koppelbar ist, aufgrund dessen der weitere Betrieb möglich ist oder dieser aufgehoben oder eingeschränkt ist.

2. Kraftfahrzeug nach Anspruch 1
wobei das Signal der Getriebewegfahrsperre (3) in vorbestimmten Zeitabfolgen erzeugbar ist.

3. Kraftfahrzeug nach Anspruch 1 oder Anspruch 2,
wobei der Kraftschluss bis zur Rutschgrenze der zumindest einen steuerbaren Kupplung (10) erfolgt.

4. Kraftfahrzeug nach einem der Ansprüche 1 bis 3,
wobei der Wandler (7) als Turbine eines automatischen Getriebes ausgeführt ist.

## Claims

1. Vehicle with an immobiliser, having a transmission (4) which comprises a converter (7) and a rotary speed detecting device (6) associated with the converter (7), and at least one controllable clutch (10) for bringing about a frictional connection between the converter (7) and other transmission components and comprising, arranged in the transmission (4), a transmission immobiliser (3) wherein, starting from the immobiliser (3), a signal can be generated for controlling the at least one controllable clutch (10) to bring about the frictional connection and wherein a signal from the rotary speed detecting device (6) can be coupled to the transmission immobiliser (3), on the basis of which, further operation is possible or it is stopped or restricted.

2. Vehicle according to claim 1, wherein the signal from the transmission immobiliser (3) can be generated in predetermined chronological sequences.

3. Vehicle according to claim 1 or 2, wherein the frictional connection takes place as far as the slipping limit of the at least one controllable clutch (10).

4. Vehicle according to one of the claims 1 to 3, wherein the converter (7) is configured as a turbine of an automatic transmission.

## Revendications

1. Véhicule automobile doté d'un système antidémarrage, comprenant
un engrenage (4) présentant un convertisseur (7),
un dispositif de détection de régime (6) associé au convertisseur (7),
au moins un dispositif d'accouplement (10) pouvant être commandé pour provoquer une liaison par adhérence entre le convertisseur (7) et d'autres composants d'engrenage et
un système antidémarrage d'engrenage (3) disposé dans l'engrenage (4), grâce à quoi en partant du système antidémarrage d'engrenage (3) un signal peut être généré pour commander le au moins un dispositif d'accouplement (10) pouvant être commandé pour provoquer l'adhérence et
un signal du dispositif de détection de régime (6) pour le système antidémarrage d'engrenage (3) peut être couplé sur la base duquel, la poursuite du fonctionnement est possible ou celle-ci est supprimée ou limitée.

2. Véhicule automobile selon la revendication 1, dans lequel
le signal du système antidémarrage d'engrenage (3) peut être généré en successions prédéterminées dans le temps.

3. Véhicule automobile selon la revendication 1 ou 2,
dans lequel
la liaison par adhérence survient jusqu'au point de glissement du au moins un dispositif d'accouplement (10) pouvant être commandé.

4. Véhicule automobile selon l'une quelconque des revendications 1 à 3, dans lequel
le convertisseur (7) est réalisé sous forme d'une turbine d'un engrenage automatique.
